# EUROPEAN PATENT APPLICATION

(11) **EP 2 223 944 A1**
(43) Date of publication of application: **01.09.2010**
(21) Application number: 09153718.3
(22) Date of filing: 26.02.2009
(51) Int. Cl.: C08F 4/659, C08F 10/06

(54) **Process for producing semicrystalline propylene polymers**

(71) Applicant: Borealis AG, 1220 Vienna (AT)
(72) Inventor: Maaranen, Janne, 04260, Kerava (FI); Elo, Pertti, 00790, Helsinki (FI); Severn, John, 00810, Helsinki (FI); Lehtiniemi, Ismo, 04500, Kellokoski (FI); Voskoboynikov, Alexander, 129515, Moscow (RU); Asachenko, Andrey, 119234, Moscow (RU)
(74) Representative: Salminen, Hannu

(57) **Abstract**

The present invention provides a process for producing propylene polymers having a crystallinity of at least 20 % where the process comprising contacting a monomer mixture comprising propylene with a catalyst comprising (A) a metallocene compound having the formula (I) below and (B) and activator for said metallocene,

QR₂(lndR₇₋ₚ)₂MeX₂ (I)

wherein Ind is a ligand having indenyl or tetrahydroindenyl structure, each R independently is an alkyl, aryl, alkylaryl, arylalkyl, alkylene, silyl, alkoxy or siloxy group having from 1 to 30 carbon atoms, Q is Si or C, Me is a transition metal of group 4 or 5, each X independently is a halogen, or an alkyl, aryl, alkylaryl, arylalkyl, alkylene, silyl, alkoxy or siloxy group having from 1 to 30 carbon atoms and p is an integer from 1 to 6, **characterized in that** Q is a bridging group connecting one of the carbons 1 to 3 of one ligand Ind to one of the carbons 4 to 7 of the other ligand Ind.

The process according to the present invention produces homo- and copolymers of propylene having a high melting temperature and a high molecular weight.

## Description

### Objective of the Invention

The objective of the present invention is to provide a process for producing propylene polymers. More specifically, the present invention offers a process for polymerizing propylene, optionally together with other olefins, in the presence of an asymmetric metallocene catalyst. In particular, the present invention offers a process for producing semicrystalline propylene polymers having a high molecular weight and high crystallinity.

Especially specifically, the present invention offers a process for polymerizing propylene, in the presence of a metallocene catalyst having two bridged indenyl ligands where the bridge connects the five-ring of one indenyl ligand to the six-ring of the other indenyl ligand.

### Technical Field

Bridges from the 4-position of an indenyl ring are not new. WO96/38458 describes complexes bridged between the 4-position of two indenyl ligands.

Asymmetric bridged metallocenes are not new either. WO01/40238 describes a metallocene in which an indenyl group is connected by a methylene bridge via its 4-position to a cyclopentadienyl moiety. The compounds were reported to be useful for homo- and copolymerization of olefins, for instance for producing elastomeric copolymers of propylene and ethylene.

WO2006/065906 describes bridged indenyl ligand systems in which halogen substituents are present. WO2006/065809 and WO2005108435 describe indenyl ligands bridged using group 15 and 16 atoms such as phosphorus and WO2005/105864 describes bridged indenyl ligand systems in which aromatic heterocycles are bound to the indenyl ring system.

### Summary of the Invention

As seen from one aspect the present invention provides a process for producing propylene polymers having a crystallinity of at least 20 %, said process comprising contacting a monomer mixture comprising propylene with a catalyst comprising (A) a metallocene compound having the formula (I) below and (B) and activator for said metallocene,

QR₂(IndR₇₋ₚ)₂MeX₂ (I)

wherein Ind is a ligand having indenyl or tetrahydroindenyl structure, each R independently is hydrogen, an alkyl, aryl, alkylaryl, arylalkyl, alkylene, silyl, alkoxy or siloxy group having from 1 to 30 carbon atoms, Q is Si or C, Me is a transition metal of group 4 or 5, each X independently is a halogen, or an alkyl, aryl, alkylaryl, arylalkyl, alkylene, silyl, alkoxy or siloxy group having from 1 to 30 carbon atoms and p is an integer from 1 to 6, characterized in that Q is a bridging group connecting one of the carbons 1 to 3 of one ligand Ind to one of the carbons 4 to 7 of the other ligand Ind.

The process according to the present invention produces homo- and copolymers of propylene having a high melting temperature and a high molecular weight.

Surprisingly the compounds according to formula (I) have been found to produce crystalline polypropylene in polymerization. The expectation until now has been that the formation of crystalline (isotactic or syndiotactic) polypropylene requires the presence of a symmetrical compound, as taught by Resconi et al, in Chemical Reviews, 2000, vol. 100, No. 4, p. 1263.

### Detailed Description

According to the present invention propylene, optionally together with other olefin comonomers, are polymerized in the presence of a with a catalyst comprising (A) a metallocene compound having the formula (I) below and (B) and activator for said metallocene,

QR₂(IndR₇₋ₚ)₂MeX₂ (I)

wherein Ind is a ligand having indenyl or tetrahydroindenyl structure, each R independently is hydrogen, an alkyl, aryl, alkylaryl, arylalkyl, alkylene, silyl, alkoxy or siloxy group having from 1 to 30 carbon atoms, Q is Si or C, Me is a transition metal of group 4 or 5, each X independently is a halogen, or an alkyl, aryl, alkylaryl, arylalkyl, alkylene, silyl, alkoxy or siloxy group having from 1 to 30 carbon atoms and p is an integer from 1 to 6, where Q is a bridging group connecting one of the carbons 1 to 3 of one ligand Ind to one of the carbons 4 to 7 of the other ligand Ind and the propylene polymer has a crystallinity of at least 20 %.

Compounds that have been found as especially suitable for propylene polymerization are

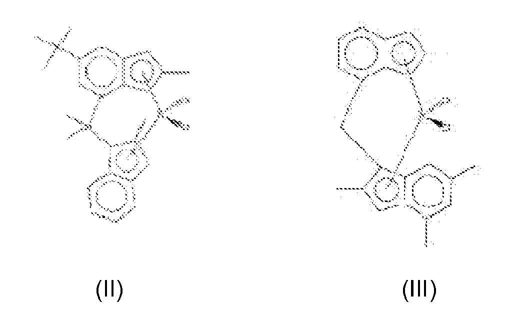

### Synthesis of the compounds:

The ligands required to form the catalysts of the invention can be synthesised by any process and the skilled organic chemist would be able to devise various synthetic protocols for the manufacture of the necessary ligand materials. The prior art is replete with description of the formation of bridged metallocenes and the principles by which these compounds are made are applicable here to.

The crucial step in the formation of the ligands of the invention is of course, the formation of the bridging group at the 4 to 7 position of the indenyl ring. Whilst the skilled man is able to devise various methods of achieving this, one such method for each of the preferred bridges of the invention is presented below.

### Intermediate

A useful intermediate in the formation of all the necessary bridges is a compound of formula (IV)

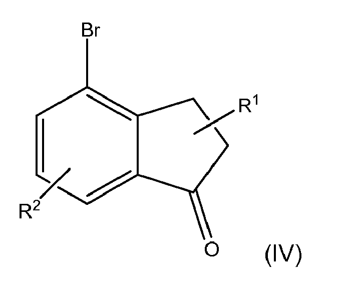

This compound can be prepared from a toluene analogue which is brominated both alpha to the methyl group and on the methyl group before the formation of the five membered ring as shown below in Scheme 1.

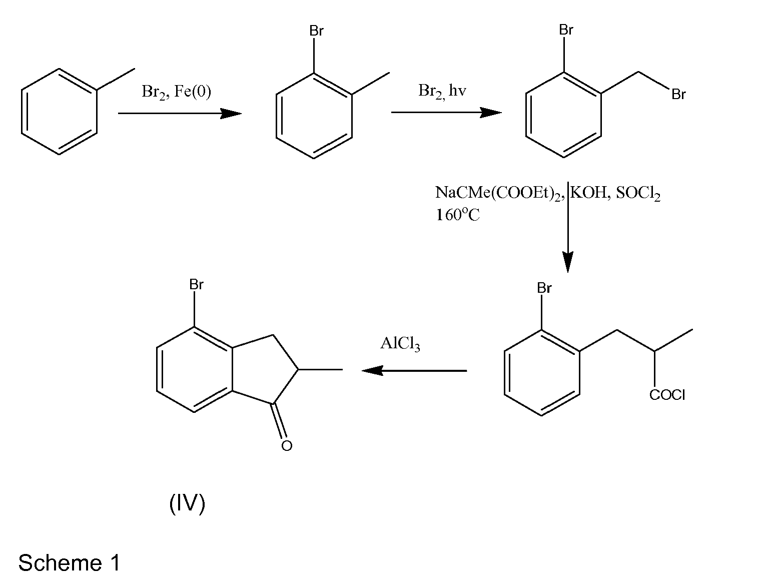

It will be appreciated that different substituents can be introduced onto compounds of formula (IV) using known chemistry. For example, an alkyl group could be introduced at the 1 position (carbonyl) if it is reacted with a Grignard reagent before the resulting hydroxy group is eliminated.

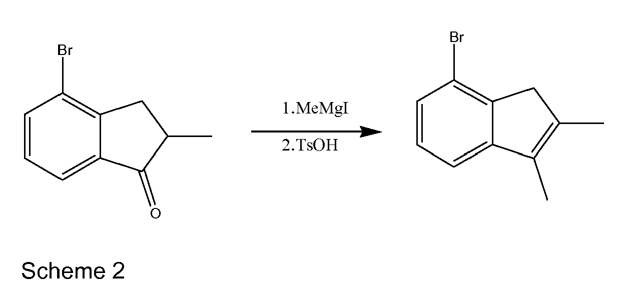

### Silyl Bridges

Once formed the compound of formula (IV) or analogous compounds can be reduced to form a 4-bromoindene structure. Formation of a silyl bridge precursor is then easily effected by conversion of the bromoindene into a Grignard type structure using magnesium and nucleophilic substitution with for example, with SiMe₂Cl₂.

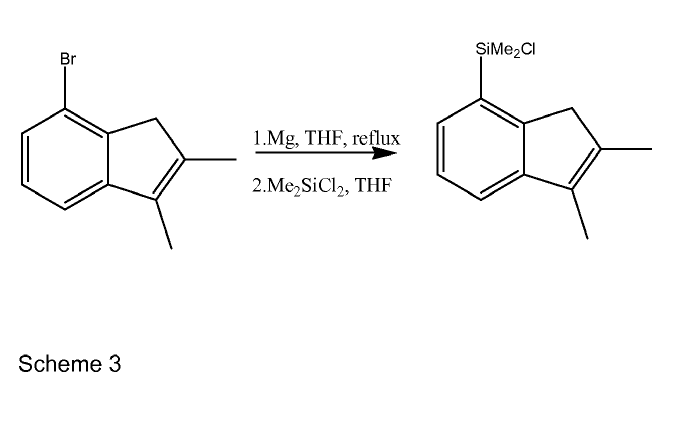

### Ethylene Bridges

To form an ethylene bridge an ethyl group needs to be added to indene group at an appropriate position. This can be achieved through the reaction of a suitable anion with ethylene oxide as shown in Scheme 4 below. The hydroxyl group formed is readily converted into a more active leaving group, e.g. bromide, to allow easy reaction with the other η ligand presented as nucleophiles or through Grignard chemistry as above. The indene rings are formed simply by reductive elimination of methanol using tosyl alcohol. This can be effected before bridge formation or after bridge formation.

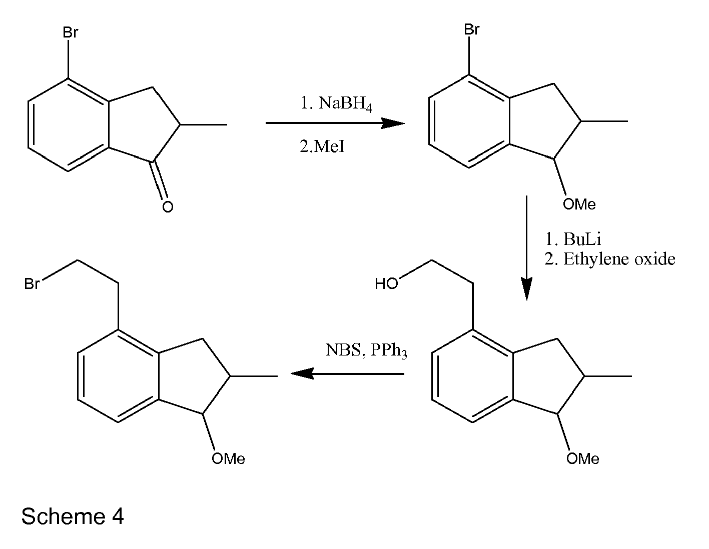

### Methylene Bridges

These can also be made from the intermediate above if in a first step the carbonyl is converted to an alkoxy group (e.g. by reduction of the carbonyl and reaction of hydroxide with a suitable electrophile). The Br can then be replaced by -CHO, reduced to hydroxymethyl and activated, e.g. by tosylation or conversion to a bromide to form an electrophilic species capable of reaction with a cyclopentadienyl nucleophile. The indene ring is formed by elimination of the alkoxy group. These reactions are summarised below in Scheme 5.

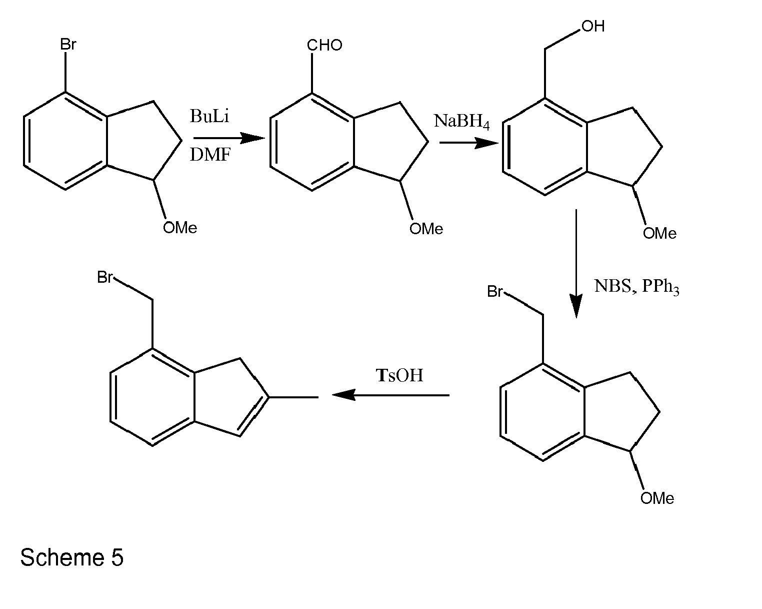

### 5/6 Position Bridge

Bridges at the 5 or 6 position can be introduced using the available starting material:

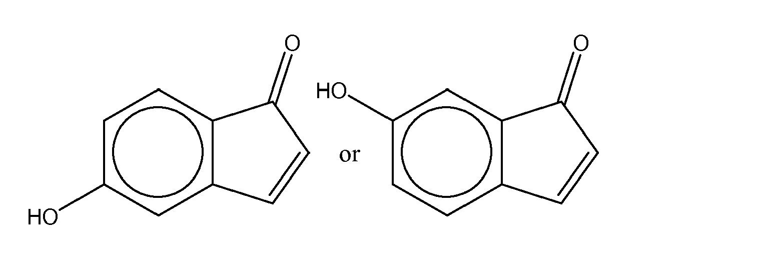

The OH group can be converted to Br using Ph₃PBr₂ and the resulting ketobromide manipulated as described above in connection with compound (IV) and ethylene or silyl bridges.

### Bridge Formation

Once a suitable indene compound has been produced carrying a precursor to a bridge at an appropriate position in the indenyl ring, the actual formation of the bridged complex is trivial as a cyclopentadienyl ion acts as a nucleophile displacing the leaving group from the bridge precursor thereby forming a bridged ligand. The cyclopentadienyl ion employed will, preferably, be functionalised as desired prior to formation of the bridged ligand.

Formation of the desired complex is effected by reacting the desired ligand with an appropriate quantity of base, e.g. an organolithium compound, such as methyllithium or butyllithium.

The ligand can then be metallated conventionally, e.g. by reaction with a halide of the metal, preferably in an organic solvent, e.g. a hydrocarbon or a hydrocarbon/ ether mixture or ether (THF). The metal halide can, of course, contain substituents other than halides although typically the ligand is MCl₃ or especially MCl₄.

An alternative approach to the complexes is also envisaged where the ligand is reacted with M(NMe₂)₄ or M(CH₂Ph)₄. The resulting complexes may therefore contain amino or benzyl sigma ligands rather than halide ligands. In essence, as long as there are groups to displace, any metal compound can be used to form the complexes of the invention depending on the nature of any other ligands which the skilled man wants to be present.

σ-ligands other than chlorine may, however, also be introduced by displacement of chlorine from a complex metal chloride by reaction with appropriate nucleophilic reagent (e.g. methyl lithium or methylmagnesium chloride) or using, instead of a metal halide, a reagent such as tetrakisdimethylamidotitanium or metal compounds with mixed chloro and dimethylamido ligands.

### Catalysts

To form an active catalytic species it is normally necessary to employ a cocatalyst as is well known in the art. Cocatalysts used to activate metallocene catalysts are suitable for use in this invention. Complex and cocatalyst may be introduced into the polymerization reactor separately or together or, more preferably they are pre-reacted and their reaction product is introduced into the polymerization reactor.

As mentioned above, the olefin polymerisation catalyst system of the invention comprises (A) a complex in which the metal ion is coordinated by a ligand of the invention; and normally (B) an aluminium alkyl compound (or other appropriate cocatalyst), or the reaction product thereof.

While the aluminium alkyl compound may be an aluminium trialkyl (e.g. triethylaluminium (TEA)) or an aluminium dialkyl halide (e.g. diethyl aluminium chloride (DEAC)), it is preferably an alumoxane, either MAO or an alumoxane other than MAO, such as an isobutylalumoxane, e.g. TIBAO (tetraisobutylalumoxane) or HIBAO (hexaisobutylalumoxane). Alternatively, however, the alkylated (e.g. methylated) catalysts of the invention may be used with other cocatalysts, e.g. boron compounds such as B(C₆F₅)₃, C₆H₅N(CH₃)₂H:B(C₆F₅)₄, (C₆H₅)₃C:B(C₆F₅)₄ or Ni(CN)₄[B(C₆F₅)₃]₄²⁻.

If desired the complex, complex/cocatalyst mixture or a complex/cocatalyst reaction product may be used in unsupported form, i.e. complex and MAO can be precipitated without an actual carrier material and used as such. However the complex or its reaction product with the cocatalyst is preferably introduced into the polymerization reactor in supported form, e.g. impregnated into a porous particulate support.

The particulate support material used is preferably an organic or inorganic material, e.g. a polymer (such as for example polyethylene, polypropylene, an ethylene-propylene copolymer, another polyolefin or polystyrene or a combination thereof). Such polymeric supports may be formed by precipitating a polymer or by a prepolymerization, e.g. of monomers used in the polymerization for which the catalyst is intended. However, the support is especially preferably a metal or metalloid oxide such as silica, alumina or zirconia or a mixed oxide such as silica-alumina, in particular silica, alumina or silica-alumina.

Particularly preferably, the support material is acidic, e.g. having an acidity greater than or equal to silica, more preferably greater than or equal to silica-alumina and even more preferably greater than or equal to alumina. The acidity of the support material can be studied and compared using the TPD (temperature programmed desorption of gas) method. Generally the gas used will be ammonia. The more acidic the support, the higher will be its capacity to adsorb ammonia gas. After being saturated with ammonia, the sample of support material is heated in a controlled fashion and the quantity of ammonia desorbed is measured as a function of temperature.

Especially preferably the support is a porous material so that the complex may be loaded into the pores of the support, e.g. using a process analogous to those described in WO94/14856 (Mobil), WO95/12622 (Borealis) and WO96/00243 (Exxon). The particle size is not critical but is preferably in the range 5 to 200 µm, more preferably 20 to 80 µm.

Before loading, the particulate support material is preferably calcined, i.e. heat treated, preferably under a non-reactive gas such as nitrogen. This treatment is preferably at a temperature in excess of 100°C, more preferably 200°C or higher, e.g. 200-800°C, particularly about 300°C. The calcination treatment is preferably effected for several hours, e.g. 2 to 30 hours, more preferably about 10 hours.

The support may be treated with an alkylating agent before being loaded with the catalyst. Treatment with the alkylating agent may be effected using an alkylating agent in a gas or liquid phase, e.g. in an organic solvent for the alkylating agent. The alkylating agent may be any agent capable of introducing alkyl groups, preferably C₁₋₆ alkyl groups and most especially preferably methyl groups. Such agents are well known in the field of synthetic organic chemistry. Preferably the alkylating agent is an organometallic compound, especially an organoaluminium compound (such as trimethylaluminium (TMA), dimethyl aluminium chloride, triethylaluminium) or a compound such as methyl lithium, dimethyl magnesium, triethylboron, etc.

The quantity of alkylating agent used will depend upon the number of active sites on the surface of the carrier. Thus for example, for a silica support, surface hydroxyls are capable of reacting with the alkylating agent. In general, an excess of alkylating agent is preferably used with any unreacted alkylating agent subsequently being washed away.

Following treatment of the support material with the alkylating agent, the support is preferably removed from the treatment fluid and any excess treatment fluid is allowed to drain off.

The optionally alkylated support material is loaded with the catalyst. This loading may be effected by using a solution of the catalyst in an organic solvent therefor, e.g. as described in the patent publications referred to above. Preferably, the volume of catalyst solution used is from 50 to 500% of the pore volume of the carrier, more especially preferably 80 to 120%. The concentration of catalyst compound in the solution used can vary from dilute to saturated depending on the amount of metallocene active sites that it is desired be loaded into the carrier pores.

The active metal (i.e. the metal of the catalyst) is preferably loaded onto the support material at from 0.1 to 4%, preferably 0.5 to 3.0%, especially 1.0 to 2.0%, by weight metal relative to the dry weight of the support material.

After loading of the catalyst onto the support material, the loaded support may be recovered for use in olefin polymerization, e.g. by separation of any excess catalyst solution and if desired drying of the loaded support, optionally at elevated temperatures, e.g. 25 to 80°C.

Alternatively, a cocatalyst, e.g. an alumoxane or an ionic catalyst activator (such as a boron or aluminium compound, especially a fluoroborate) may also be mixed with or loaded onto the catalyst support material. This may be done subsequently or more preferably simultaneously to loading of the complex, for example by including the cocatalyst in the solution of the catalyst, by contacting the catalyst loaded support material with a solution of the cocatalyst or catalyst activator, e.g. a solution in an organic solvent, or by first impregnating the cocatalyst with a support and then contacting the cocatalyst impregnated support with a solution of the catalyst or neat catalyst (e.g. as described in WO96/32423). Alternatively however any such further material may be added to the catalyst-loaded support material in the polymerization reactor or shortly before dosing of the catalyst material into the reactor.

In this regard, as an alternative to an alumoxane it may be preferred to use a fluoroborate catalyst activator for the alkylated catalysts, especially a B(C₆F₅)₃ or more especially a -B(C₆F₅)₄ compound, such as C₆H₅N(CH₃)₂H:B(C₆F₅)₄ or (C₆H₅)₃C:B(C₆F₅)₄. Other borates of general formula (cation)ₐ (borate)_{b} where a and b are positive numbers, may also be used.

As an alternative to the loading of the optionally alkylated support material with a solution of the procatalyst in an organic solvent, loading of the catalyst may be effected by mixing it with the optionally alkylated support material in the absence of solvents with said carrier at a temperature of at least 50°C but less than the vaporisation temperature of the metallocene compound. The particular features of this so-called dry mixing method are disclosed in WO 96/32423 (Borealis). If use of a cocatalyst/catalyst activator in such process is desired, this may be impregnated into the optionally alkylated support material prior to loading of the catalyst.

Where such a cocatalyst or catalyst activator is used, it is preferably used in a mole ratio to the metallocene of from 0.1:1 to 10000:1, especially 1:1 to 50:1, particularly 2:1 to 30:1. More particularly, where an alumoxane cocatalyst is used, then for an unsupported catalyst the aluminium: metallocene metal (M) molar ratio is conveniently 2:1 to 10000:1, preferably 50:1 to 1000:1. Where the catalyst is supported the AI:M molar ratio is conveniently 2:1 to 10000:1 preferably 50:1 to 400:1. Where a borane cocatalyst (catalyst activator) is used, the B:M molar ratio is conveniently 2:1 to 1:2, preferably 9:10 to 10:9, especially 1:1. When a neutral triarylboron type cocatalyst is used the B:M molar ratio is typically 1:2 to 500:1, however some aluminium alkyl would normally also be used. When using ionic tetraaryl borate compounds, it is preferred to use carbonium rather than ammonium counterions or to use B:M molar ratio 1:1.

Where the further material is loaded onto the catalyst loaded support material, the support may be recovered and if desired dried before use in olefin polymerization.

### Polymerization process

The olefin polymerized using the catalyst of the invention is propylene, optionally together with ethylene and/or one or more α-olefins having from 4 to 20 carbon atoms, e.g. ethylene, 1-butene, 1-hexene, 4-methyl-1-pentene, 1-octene etc or the mixtures of these.

In general, where the polymer being produced is a homopolymer it will be polypropylene. Where the polymer being produced is a copolymer it will likewise preferably be a propylene copolymer with ethylene or propylene making up the major proportion (by number and more preferably by weight) of the monomer residues. Comonomers, such as C₄₋₈ alkenes, will generally be incorporated to contribute to the mechanical strength of the polymer product.

Polymerization in the method of the invention may be effected in one or more, e.g. 1, 2 or 3, polymerization reactors, using conventional polymerization techniques, e.g. gas phase, solution phase, slurry or bulk polymerization.

In general, a combination of slurry (or bulk) and at least one gas phase reactor is often preferred, particularly with the reactor order being slurry (or bulk) then one or more gas phase.

### Prepolymerization

In a preferred embodiment, the prepolymerization is conducted in a continuous manner as bulk slurry polymerization in liquid propylene, i.e. the liquid phase mainly comprises propylene, with minor amount of other reactants and optionally inert components dissolved therein. Preferably the prepolymerization is conducted in a continuous stirred tank reactor or a loop reactor.

The prepolymerization reaction is typically conducted at a temperature of 0 to 60 °C, preferably from 10 to 50 °C, and more preferably from 20 to 45 °C.

The pressure in the prepolymerization reactor is not critical but must be sufficiently high to maintain the reaction mixture in liquid phase. Thus, the pressure may be from 20 to 100 bar, for example 30 to 70 bar.

The reaction conditions are well known in the art as disclosed, among others, in EP 1939226.

In the prepolymerization step it is also possible to feed comonomers into the prepolymerization stage. Examples of suitable comonomers are ethylene or alpha-olefins having from 4 to 10 carbon atoms. Especially suitable comonomers are ethylene, 1-butene, 1-hexene, 1-octene or their mixtures. Most preferable comonomer is ethylene.

In average, the amount of prepolymer on the catalyst is preferably from 10 to 1000 g per g of the solid catalyst component, more preferably is from 50 to 500 g per g of the solid catalyst component.

As the person skilled in the art knows, the catalyst particles recovered from a continuous stirred prepolymerization reactor do not all contain the same amount of prepolymer. Instead, each particle has its own characteristic amount which depends on the residence time of that particle in the prepolymerization reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst is preferably within the limits specified above. The amount of prepolymer is known in the art, among others, from EP 1939226.

The catalyst components are preferably all introduced into the prepolymerization step. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is possible to add other components also to the prepolymerization stage. Thus, hydrogen may be added into the prepolymerization stage to control the molecular weight of the prepolymer as is known in the art. Further, antistatic additive may be used to prevent the particles from adhering to each other or the walls of the reactor as disclosed in WO-A-00/66640.

### Slurry

The polymerization in the first polymerization zone may be conducted in slurry. Then the polymer particles formed in the polymerization, together with the catalyst fragmented and dispersed within the particles, are suspended in the fluid hydrocarbon. The slurry is agitated to enable the transfer of reactants from the fluid into the particles.

Slurry polymerization is preferably a so called bulk polymerization. By "bulk polymerization" is meant a process where the polymerization is conducted in a liquid monomer essentially in the absence of an inert diluent. However, as it is known to a person skilled in the art the monomers used in commercial production are never pure but always contain aliphatic hydrocarbons as impurities. For instance, the propylene monomer may contain up to 5 % of propane as an impurity. As propylene is consumed in the reaction and also recycled from the reaction effluent back to the polymerization, the inert components tend to accumulate, and thus the reaction medium may comprise up to 40 wt-% of other compounds than monomer. It is to be understood, however, that such a polymerization process is still within the meaning of "bulk polymerization", as defined above.

The temperature in the slurry polymerization is typically from 50 to 110°C, preferably from 60 to 100 °C and in particular from 65 to 95 °C. The pressure is from 1 to 150 bar, preferably from 10 to 100 bar. In some cases it may be preferred to conduct the polymerization at a temperature which is higher than the critical temperature of the fluid mixture constituting the reaction phase and at a pressure which is higher than the critical pressure of said fluid mixture. Such reaction conditions are often referred to as "supercritical conditions". The phrase "supercritical fluid" is used to denote a fluid or fluid mixture at a temperature and pressure exceeding the critical temperature and pressure of said fluid or fluid mixture.

The slurry polymerization may be conducted in any known reactor used for slurry polymerization. Such reactors include a continuous stirred tank reactor and a loop reactor. It is especially preferred to conduct the polymerization in loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

The slurry may be withdrawn from the reactor either continuously or intermittently. A preferred way of intermittent withdrawal is the use of settling legs where the solids concentration of the slurry is allowed to increase before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and EP-A-1860125. The continuous withdrawal may be combined with a suitable concentration method, as disclosed in EP-A-1860125 and EP-A-1591460.

Into the slurry polymerization stage other components may also be introduced as it is known in the art. Thus, hydrogen can be used to control the molecular weight of the polymer. Process additives may also be introduced into the reactor to facilitate a stable operation of the process.

When the slurry polymerization stage is followed by a gas phase polymerization stage it is preferred to conduct the slurry directly into the gas phase polymerization zone without a flash step between the stages. This kind of direct feed is described in EP-A-887379, EP-A-887380, EP-A-887381 and EP-A-991684.

### Gas phase

One or more of the reaction zones may be gas phase polymerization zones.

### Fluidized bed

In a fluidized bed gas phase reactor an olefin is polymerized in the presence of a polymerization catalyst in an upwards moving gas stream. The reactor typically contains a fluidized bed comprising the growing polymer particles containing the active catalyst located above a fluidization grid.

The polymer bed is fluidized with the help of the fluidization gas comprising the olefin monomer, eventual comonomer(s), eventual chain growth controllers or chain transfer agents, such as hydrogen, and eventual inert gas. The fluidization gas is introduced into an inlet chamber at the bottom of the reactor. To make sure that the gas flow is uniformly distributed over the cross-sectional surface area of the inlet chamber the inlet pipe may be equipped with a flow dividing element as known in the art, e.g. US-A-4933149 and EP-A-684871.

From the inlet chamber the gas flow is passed upwards through a fluidization grid into the fluidized bed. The purpose of the fluidization grid is to divide the gas flow evenly through the cross-sectional area of the bed. Sometimes the fluidization grid may be arranged to establish a gas stream to sweep along the reactor walls, as disclosed in WO-A-2005/087361. Other types of fluidization grids are disclosed, among others, in US-A-4578879, EP 600414 and EP-A-721798. An overview is given in Geldart and Bayens: The Design of Distributors for Gas-fluidized Beds, Powder Technology, Vol. 42, 1985.

The fluidization gas passes through the fluidized bed. The superficial velocity of the fluidization gas must be higher that minimum fluidization velocity of the particles contained in the fluidized bed, as otherwise no fluidization would occur. On the other hand, the velocity of the gas should be lower than the onset velocity of pneumatic transport, as otherwise the whole bed would be entrained with the fluidization gas. The minimum fluidization velocity and the onset velocity of pneumatic transport can be calculated when the particle characteristics are know by using common engineering practise. An overview is given, among others in Geldart: Gas Fluidization Technology, J.Wiley & Sons, 1986.

When the fluidization gas is contacted with the bed containing the active catalyst the reactive components of the gas, such as monomers and chain transfer agents, react in the presence of the catalyst to produce the polymer product. At the same time the gas is heated by the reaction heat.

The unreacted fluidization gas is removed from the top of the reactor and cooled in a heat exchanger to remove the heat of reaction. The gas is cooled to a temperature which is lower than that of the bed to prevent the bed from heating because of the reaction. It is possible to cool the gas to a temperature where a part of it condenses. When the liquid droplets enter the reaction zone they are vaporised. The vaporisation heat then contributes to the removal of the reaction heat. This kind of operation is called condensed mode and variations of it are disclosed, among others, in WO-A-2007/025640, US-A-4543399, EP-A-699213 and WO-A-94/25495. It is also possible to add condensing agents into the recycle gas stream, as disclosed in EP-A-696293. The condensing agents are non-polymerizable components, such as n-pentane, isopentane, n-butane or isobutane, which are at least partially condensed in the cooler.

The gas is then compressed and recycled into the inlet chamber of the reactor. Prior to the entry into the reactor fresh reactants are introduced into the fluidization gas stream to compensate for the losses caused by the reaction and product withdrawal. It is generally known to analyze the composition of the fluidization gas and introduce the gas components to keep the composition constant. The actual composition is determined by the desired properties of the product and the catalyst used in the polymerization.

The catalyst may be introduced into the reactor in various ways, either continuously or intermittently. Among others, WO-A-01/05845 and EP-A-499759 disclose such methods. Where the gas phase reactor is a part of a reactor cascade the catalyst is usually dispersed within the polymer particles from the preceding polymerization stage. The polymer particles may be introduced into the gas phase reactor as disclosed in EP-A-1415999 and WO-A-00/26258. Especially if the preceding reactor is a slurry reactor it is advantageous to feed the slurry directly into the fluidized bed of the gas phase reactor as disclosed in EP-A-887379, EP-A-887380, EP-A-887381 and EP-A-991684.

The polymeric product may be withdrawn from the gas phase reactor either continuously or intermittently. Combinations of these methods may also be used. Continuous withdrawal is disclosed, among others, in WO-A-00/29452. Intermittent withdrawal is disclosed, among others, in US-A-4621952, EP-A-188125, EP-A-250169 and EP-A-579426.

The top part of the gas phase reactor may include a so called disengagement zone. In such a zone the diameter of the reactor is increased to reduce the gas velocity and allow the particles that are carried from the bed with the fluidization gas to settle back to the bed.

The bed level may be observed by different techniques known in the art. For instance, the pressure difference between the bottom of the reactor and a specific height of the bed may be recorded over the whole length of the reactor and the bed level may be calculated based on the pressure difference values. Such a calculation yields a time-averaged level. It is also possible to use ultrasonic sensors or radioactive sensors. With these methods instantaneous levels may be obtained, which of course may then be averaged over time to obtain a time-averaged bed level.

Also antistatic agent(s) may be introduced into the gas phase reactor if needed. Suitable antistatic agents and methods to use them are disclosed, among others, in US-A-5026795, US-A-4803251, US-A-4532311, US-A-4855370 and EP-A-560035. They are usually polar compounds and include, among others, water, ketones, aldehydes and alcohols.

The reactor may also include a mechanical agitator to further facilitate mixing within the fluidized bed. An example of suitable agitator design is given in EP-A-707513.

### Fast fluidized bed

The polymerization may also be conducted in a fast fluidized bed reactor. In such a reactor the velocity of the fluidization gas exceeds the onset velocity of pneumatic transport. Then the whole bed is carried by the fluidization gas. The gas transports the polymer particles to a separation device, such as cyclone, where the gas is separated from the polymer particles. The polymer is transferred to a subsequent reaction zone, such as a settled bed or a fluidized bed or another fast fluidized bed reactor. The gas, on the other hand, is compressed, cooled and recycled to the bottom of the fast fluidized bed reactor. In one such embodiment the polymer is transferred from the riser (operated in fast fluidized mode) into the downcomer (operated as settled bed, as explained below) and the fluidizing gas is then directed to compression and cooling as described above. The combination of fast fluidized bed and settled bed is disclosed, among others, in WO-A-97/04015, WO-A-2006/022736 and WO-A-2006/120187.

### Settled bed

Polymerization may also be conducted in a settled bed. In the settled bed the polymer flows downward in a plug flow manner in an environment containing reactive components in gaseous phase. The polymer powder is introduced into the bed from the top from where it flows downwards due to gravity.

The reactants, such as hydrogen, monomer and comonomers, may be introduced at any point of the reactor. However, where the gas flows upwards its velocity should not exceed the minimum fluidization velocity as otherwise no downward flow of powder would be obtained. It is also preferred to have a gas buffer at the top of the reactor so that reaction gas from previous polymerization zones contained in the polymer powder would be removed to the extent possible.

The temperature of the settled bed may be controlled by adjusting the temperature and ratio of the reactant and/or inert gases introduced into the settled bed zone.

The settled bed polymerization zone is preferably combined with a fluidized bed polymerization zone or fast fluidized bed reaction zone. Thus, the polymer is introduced into the top of the settled bed zone from a fluidized bed zone or a fast fluidized bed zone. The polymer is withdrawn from the bottom of the settled bed polymerization zone and recycled into the fluidized bed polymerization zone or fast fluidized bed polymerization zone.

Polymerization in settled bed is disclosed, among others, in EP-A-1633466, EP-A-1484343 and WO-A-97/04015.

Generally the quantity of catalyst used will depend upon the nature of the catalyst, the reactor types and conditions and the properties desired for the polymer product. Conventional catalyst quantities, such as described in the publications referred to herein, may be used.

The polymer produced using the catalysts of the invention will generally possess a high Mw, e.g. greater than 50,000, preferably greater than 80,000, more preferably greater than 100,000 g/mol.

Furthermore, the polymers produced by using the catalysts of the invention will generally be semicrystalline and possess a crystalline melting temperature of at least 90 °C, preferably at least 95 °C and more preferably at least 100 °C.

The polymers made by the catalysts of the invention are useful in all kinds of end articles such as pipes, films, moulded articles (e.g. injection moulded, blow moulded, and rotomoulded articles), and extrusion coatings and so on.

The invention will now be illustrated by reference to the following non-limiting Examples:

### Examples

### Molecular weights

The weight average molecular weight Mw and the molecular weight distribution (MWD = Mw/Mn wherein Mn is the number average molecular weight and Mw is the weight average molecular weight) is measured according to ISO 16014-4:2003 and ASTM D 6474-99. A Waters GPCV2000 instrument, equipped with refractive index detector and online viscosimeter was used with 2 x GMHXL-HT and 1x G7000HXL-HT TSK-gel columns from Tosoh Bioscience and 1,2,4-trichlorobenzene (TCB, stabilized with 250 mg/L 2,6-Di tert butyl-4-methyl-phenol) as solvent at 140 °C and at a constant flow rate of 1 mL/min. 209.5 µL of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants were used as given in ASTM D 6474-99. All samples were prepared by dissolving 0.5 - 4.0 mg of polymer in 4 mL (at 140 °C) of stabilized TCB (same as mobile phase) and keeping for maximum 3 hours at a maximum temperature of 160 °C with continuous gentle shaking prior sampling in into the GPC instrument.

### Isotactic index (FTIR):

For propylene homo polymers an IR isotactic index was measured. The IR spectra were collected from solution cast films supported on gold-coated silicon wafers between 4000 and 400 cm⁻¹ at 4 cm⁻¹ resolution, combining 128 scans, via a Bruker vertex 70 FTIR spectrometer with a Pike MappIR specular reflectance sample accessory. IR isotactic index was calculated as the ratio of bands at 998 cm⁻¹ and 974 cm⁻¹, both bands were measured against a background taken from 1060 cm⁻¹ to 910 cm⁻¹, as reported in D.R. Burfield and P.S.T. Loi, J. Appl. Polym. Sci. 36 (1988) 279 - 293. The polymer solutions were deposited at 160 °C and then kept overnight in a vacuum oven at 140 °C before collecting the IR spectra.

### Differential Scanning Calorimeter (DSC)

Differential scanning calorimetry (DSC) was performed according to ISO11357-3, DSC curves were measured on a TA Q200, calibrated with T_{zero} baseline calibration and for temperature and enthalpy calibrated with indium; indium (Tₘ = 156.6 °C, dH = 28.45 J·g⁻¹). 3±0.5 mg of the sample was placed into an aluminium pan for measurements. A heating, cooling and second heating scan was applied to the sample at heating and cooling rates of 10 K/min in the temperature range between 0 °C and +225 °C. The results of the second heating cycle are used for determining the melting temperature (Tₘ), enthalpy of fusion (Δ*H*_{f}) and crystallinity (%). Melting and crystallization temperatures (T_{c}) were taken as the main peaks of the resulting curves. Percent crystallinity was calculated by normalizing the enthalpy of fusion to the enthalpy of fusion of 100% crystalline isotactic polypropylene, i.e. 209 J/g, taken from Brandrup J, Immergut EH. Polymer Handbook, 3rd ed. New York: Wiley; 1989. p. V/29.

### Synthesis of Starting Materials

2-Methyl-4-bromo-6-*tert*-butylindan-1-one was obtained as described in the literature [Resconi, L.; Nifant'ev, I. E.; lvchenko, P. V.; Bagrov, V.; Focante, F.; Moscardi, G. *Int. Pat. Appl.* WO 2007107448 for Basell Polyolefine GmbH, 2007.].

4-Bromo-2-methyl-1-methoxyindane was obtained as described in the literature [Izmer, V. V.; Lebedev, A. Y.; Nikulin, M. V.; Ryabov, A. N.; Asachenko, A. F.; Lygin, A. V.; Sorokin, D. S.; Voskoboynikov, A. Z. Organometallics 2006, 25, 1217.].

2,4,6-Trimethyl-1*H*-indene was obtained as described in the literature [Izmer, V. V.; Sorokin, D. A.; Kuz'mina, L. G.; Churakov, A. V.; Howard, J. A. K.; Voskoboynikov, A. Z. J. Organomet. Chem. 2005, 690, 1067.].

### Example 1

### Preparation of the metallocene compound

### 4/7-Bromo-6/5-tert-butyl-2-methyl-1H-indene

To a solution of 146 g (0.52 mol) of 4-bromo-2-methyl-1-indanone in 950 ml of THF-methanol (2:1, vol.) 38.3 g (1.02 mol) of NaBH₄ was added in small portions over 2 h at 0°C. The mixture was stirred overnight at ambient temperature. The resulting mixture was poured onto 1000 cm³ of ice and acidified with 10% HCl to pH 4. The organic layer was separated; the aqueous layer was extracted with 3 x 300 ml of methyl-*tert*-butyl ether. This combined extract was dried over K₂CO₃ and evaporated to dryness, and 1500 ml of toluene were added to the residue. This toluene solution was treated with a catalytic amount of *p*-ToISO₃H*H₂O (ca. 2 g) for 2 h at reflux. Then this mixture was cooled to room temperature and passed through a short column with Silica Gel 60 (40-63 µm, d 60 mm, I 40 mm). This column was additionally eluted with 250 ml of toluene. The combined extract was evaporated to dryness. Fractional distillation gave a mixture of the title indene, b.p. 124-128°C/5 mm Hg. Yield 83 g (83%) of colourless solid.

Anal. calc. for C₁₄H₁₇Br: C, 63.41; H, 6.46. Found: C, 63.61; H, 6.61.

¹H NMR (CDCl₃) of 7-bromo-2-methyl-5-*tert*-buthyl-1*H*-indene: δ 7.31 (m, J= 1H, 6-H), 7.28 (m, 1H, 4-H), 6.53 (m, 1H, 3-H), 3.30 (m, 2H, 1,1'-H), 2.21 (s, 3H, 2-Me), 1.39 (s, 9H, 5-C(CH₃)₃).

¹³C{¹H} NMR (CDCl₃) of 7-bromo-2-methyl-5-*tert*-buthyl-1*H*-indene: δ 152.2, 147.2, 146.8, 140.4, 127.4, 123.9, 118.1, 116.1, 43.9, 34.8, 31.6, 16.8.

### (5-tert-Butyl-2-methyl-1H-inden-7-yl)(chloro)dimethylsilane

To 1.63 g (67 mmol) of magnesium turnings (activated by 0.2 ml of 1,2-dibromoethane for 10 min) in 50 ml of THF a solution of 14.6 g (55 mmol) of 2-methyl-5-*tert*-buthyl-7-bromoindene in 350 ml of THF was added dropwise by vigorous stirring for ca. 40 min. This mixture was additionally refluxed for 1 h, and then cooled to room temperature. The Grignard reagent obtained was added dropwise at vigorous stirring to a solution of 21.4 g (166 mmol) of dichlorodimethylsilane in 50 ml of THF for 1 h at room temperature. The resulting mixture was stirred for 12 h and then evaporated to dryness. The residue was dissolved in 100 ml of ether, and the solution obtained was filtered through glass frit (G3). The precipitate was additionally washed by 3 x 50 ml of ether. The combined ether solution was evaporated to dryness, and the residue was distilled in vacuum, bp 130-132°C/1 mm Hg. Yield 11.0 g (72%).

Anal. calc. for C₁₆H₂₃ClSi: C, 68.91; H, 8.31. Found: C, 69.07; H, 8.46.

¹H NMR (CD₂Cl₂): δ 7.42 (m, 1H, 6-H), 7.38 (m, 1H, 4-H), 6.50 (m, 1H, 3-H), 3.43 (br.s, 2H, 1,1'-H), 2.19 (br.s, 3H, 2-Me), 1.36 (s, 9H, *t*-Bu), 0.86 (s, 6H, Me₂SiCl).

### (5-tert-Butyl-2-methyl-1H-inden-7-yl)(dimethyl)(2-methyl-1H-inden-1-yl)silane

To a solution of 3.25 g (25 mmol) of 2-methylindene in 190 ml of dry ether 10 ml of 2.5 M (25 mmol) of n-BuLi in hexanes was added at room temperature, and the resulting mixture was stirred for 3 hours. Then, 1.13 g (12.5 mmol) of CuCN was added at -20°C. The resulting mixture was stirred for 1 hour at room temperature, then cooled to -80°C, and a solution of 6.96 g (25 mmol) of (6/5-*tert*-Butyl-2-methyl-1*H*-inden-4/7-yl)(chloro)dimethylsilane in 20 ml of ether was added dropwise by vigorous stirring for 10 min. This mixture was additionally stirred for 12 hours at room temperature, and then 1 ml of water was added. The mixture was stirred for 5 min and passed through short column with Silica Gel 60 (40-63 um, d 50 mm, 1 30 mm). The silica gel layer was additionally washed by 100 ml of ether. The combined elute was evaporated to dryness. The product was isolated from the residue by flash chromatography using a short column with Silica Gel 60 (40-63 um, d 60 mm, I 50 mm; eluent: hexanes). Yield 3.91 g (60%).

Anal. calc. for C₂₆H₃₂Si: C, 83.81; H, 8.66. Found: C, 84.05; H, 8.78.

¹H NMR (CDCl₃): δ 7.46 (s, 1H, 6-H in 2-methyl-5-*tert*-butylindenyl), 7.38 (m, 1H, 7-H in 2-methylindenyl), 7.29 (s, 1H, 4-H in 2-methyl-5-*tert*-butylindenyl), 6.98-7.27 (m, 3H, 4,5,6-H in 2-methylindenyl), 6.69 (m, 1H, 3-H in 2-methylindenyl), 6.63 (m, 1H, 3-H in 2-methyl-5-*tert-*butylindenyl), 3.76 (s, 1H, 1-H in 2-methylindenyl), 3.30 (s, 2H, CH₂ in 2-methyl-5-*tert-*butylindenyl), 2.24 (s, 3H, 2-Me in 2-methyl-5-*tert*-butylindenyl), 2.08 (s, 3H, 2-Me in 2-methylindenyl), 1.44 (s, 9H, *t*-Bu), 0.34 (s, 6H, Me₂Si).

¹³C{¹H} NMR (CDCl₃): δ 148.31, 147.58, 146.06, 145.82, 145.30, 145.01, 144.74, 130.86, 127.25, 126.81, 125.83, 124.80, 123.10, 122.29, 119.52, 118.19, 48.11, 43.69, 34.61, 31.59, 17.36, 16.76, -3.66.

### Dimethylsilylene(η⁵-6-tert-butyl-2-methylinden-4-yl)(η⁵-2-methylinden-1-yl)zirconium dichloride

To a solution of 3.91 g (10.5 mmol) of (6/5-*tert*-butyl-2-methyl-1*H*-inden-4/7-yl)(dimethyl)(2-methyl-1*H*-inden-1-yl)silane in 200 ml of dry ether 8.40 ml of 2.5 M (21.0 mmol) of n-BuLi in hexanes was added by vigorous stirring at room temperature. Then, to the resulting mixture cooled to -50°C 3.96 g (10.5 mmol) of ZrCl₄(THF)₂ was added, and this mixture was stirred for 14 hours at ambient temperature. The reaction mixture was evaporated to dryness in vacuum. The residue was treated with 70 ml of toluene, and the obtained suspension was evaporated in vacuum. This treatment with toluene followed by evaporation to dryness was repeated twice. Then, 150 ml of toluene was added, the resulting suspension was stirred for 12 hours at reflux, and then filtered through Celite layer. The filtrate was evaporated to a volume of ca. 20 ml. Crystals precipitated at room temperature were collected, washed by 5 ml of cold toluene, and dried in vacuum. Yield 2.35 g (42%). This product has been additionally characterized by X-ray crystal structure analysis.

Anal. calc. for C₂₆H₃₀Cl₂SiZr: C, 58.62; H, 5.68. Found: C, 58.49; H, 5.80.

¹H NMR (CD₂Cl₂): δ 7.60 (m, 1H, 7-H in 2-methyl-5-*tert*-butylindenyl), 7.40 (m, 1H, 7-H in 2-methylindenyl), 7.36 (m, 1H, 5-H in 2-methyl-5-*tert*-butylindenyl), 7.07 (m, 1H, 6-H in 2-methylindenyl), 6.83 (s, 1H, 3-H in 2-methylindenyl), 6.68-6.75 (m, 2H, 4,5-H in 2- methylindenyl), 6.28 (m, 1H, 3-H in 2-methyl-5-*tert*-butylindenyl), 6.22 (m, 1H, 1-H in 2-methyl-5-*tert*-butylindenyl), 2.59 (s, 3H, 2-Me in 2-methylindenyl), 2.28 (s, 3H, 2-Me in 2-methyl-5-*tert*-butylindenyl), 1.34 (s, 9H, *t*-Bu), 1.12 (s, 3H, SiMeMe'), 0.90 (s, 3H, SiMe*Me'*).

¹³C{¹H} NMR (CD₂Cl₂): δ 150.64, 143.58, 134.55, 134.34, 133.02, 130.69, 129.25, 127.59, 127.35, 126.90, 126.55, 122.79, 121.06, 114.26, 111.32, 110.12, 102.24, 101.81, 36.41, 32.23, 19.08, 18.54, 1.96, -1.57.

### Preparation of the catalyst

The metallocene compound prepared above was heterogenized on Grace 20 micron silica with pore volume 4.2 mL/g SiO₂ and which had been treated for six hours at a temperature of 600 °C under purging with nitrogen and using AI/Metal=200 and Zr loading of 0.196 w-% as follows.

First, 1.31 mL of MAO (30 w-% solution in toluene from Albemarle) was mixed into 2.89 mL of extra toluene. Then, 15.5 mg of metallocene compound prepared as described in Preparation of the metallocene compound above was weighed to a separate vial. The MAO-toluene solution was added on the metallocene complex and the mixture was allowed to react for 30 minutes to create a yellow solution. Then the MAO-Complex-toluene mixture was added dropwise to 1.0 g of Grace XP-2485 Silica during 2 minutes. The mixture was stirred for 3 hours at room temperature after which it was dried under N₂ flow at +50°C for 3 h.

### Polymerization

### TIBA was purchased from WITCO and used as 100 mM solution in heptane.

Polymerization experiments were carried out in PPR (Parallel Pressure Reactor) which are stirred reactors each reactor having a volume of 21 mL. Reactor was conditioned by purging it with dry nitrogen for 6 hours at 85 °C. Pre-weighed disposable glass vials and disposable flat stirring paddles were fitted into the reactor. Reactor was then closed and thoroughly flushed with propylene prior the experiment. 10 µmol of freshly made TIBA solution (100 µL of 100 mM solution in heptane) was added through a valve to all 48 reactors and reactor was heated up to 30 °C and. After this the reactors were pressurised to 827 kPa (120 psi) with propylene gas followed by addition of 4mL of liquid propylene. The reactors were then heated up to 60 °C. Stirring speed was set up to 800 rpm for all reactors. The reactor temperatures were maintained at 60 °C by computer control during the experiment.

Catalyst slurries were made by mixing silica supported catalysts with heptane so that concentration of the resulting slurry was 6 mg/mL. Vortexing of 1200 rpm was applied to ensure formation of homogenous slurry.

Once the reactor temperature was stabilized catalysts were added into the reactors though a valve. Polymerizations were continued for one hour after which the reaction was terminated by addition of CO₂ (20%/80% of CO₂/N₂ was used to pressurize the reactors to 2.9 MPa). Once cooled, the reactor was degassed and flushed repeatedly with nitrogen.

Catalyst productivity is reported in g of polymer per g of catalyst (g / g). The data is shown in Table 1.

### Example 2

### Preparation of the metallocene compound

### 4-(Bromomethyl)-1-methoxy-2-methylindane

To a solution of 48.2 g (0.2 mol) of 4-bromo-2-methyl-1-methoxyindane in 700 ml of THF 80.0 ml 2.5 M (0.2 mol) n-BuLi in hexanes was added for 10 min at -80°C. The resulting mixture was stirred for 2 h at this temperature, then cooled to -110°C, and 18.7 ml (17.6 g, 0.241 mol) of DMF was added at vigorous stirring. This mixture was warmed to room temperature, 10 ml of water was added, and then the resulting mixture was evaporated in vacuum. To a solution of the residue in 1050 ml of a mixture of THF-methanol (2:1, vol.), 15.1 g (0.4 mol) of NaBH₄ was added in small portions at vigorous stirring for ca. 5 min. This mixture was stirred for 15 min at room temperature and then evaporated to dryness. To the residue 500 ml of warm water was added, and the crude alcohol was extracted with 3 x 200 ml of methylene dichloride. The combined organic extract was dried over Na₂SO₄ and then evaporated to dryness. To a mixture of the residue, 52.5 g (0.2 mol) of PPh₃, and 800 ml of THF 35.6 g (0.2 mol) of NBS was added for ca. 5 min at 20°C. The resulting mixture was stirred for 5 min and evaporated to dryness. A mixture of the residue with 500 ml of hexanes was filtered through glass frit (G3). The precipitate was additionally washed by 3 x 300 ml of hexanes. The combined organic extract was evaporated to dryness. The product was isolated using short column with Silica Gel 60 (40-63 um, d 130 mm, I 100 mm, eluent hexanes/ether = 20/1, vol.). Yield 37.8 g (74%) of a ca. 1 to 1.5 mixture of two diastereomers.

Anal. calc. for C₁₂H₁₅BrO: C, 56.49; H, 5.93. Found: C, 56.60; H, 6.04.

¹H NMR (C₆D₆): δ 7.11-7.32 (m, 6H, 5,6,7-H in indenyl of both isomers), 4.47 (d, J = 5.6 Hz, 1H, MeOC*H* of minor isomer), 4.41 (s, 2H, CH₂Br of major isomer), 4.40 (s, 2H, CH₂Br of minor isomer), 4.37 (d, J = 4.1 Hz, 1H, MeOC*H* of major isomer), 3.42 (s, 3H, OMe of major isomer), 3.36 (s, 3H, OMe of minor isomer), 3.22 (dd, J = 15.7 Hz, J = 7.3 Hz, 1H, 3-C*H*H' of major isomer), 2.95 (dd, J = 15.7 Hz, J = 7.1 Hz, 1H, 3-CHH' of minor isomer), 2.41-2.71 (m, 4H, 3-CH*H*' and C*H*Me of both isomers), 1.16 (d, J = 7.0 Hz, 3H, 2-Me of major isomer), 1.10 (d, J = 6.9 Hz, 3H, 2-Me of minor isomer).

¹³C{¹H} NMR (C₆D₆), major isomer: δ 137.9, 137.43, 137.40, 123.4, 121.3, 120.0, 85.4, 50.8, 33.9, 30.7, 25.7, 13.7.

### 7-(Bromomethyl)-2-methyl-1H-indene

To a solution of 37.5 g (0.147 mol) of 4-(bromomethyl)-1-methoxy-2-methylindane in 600 ml of toluene 3.12 g (16.4 mmol) of TsOH was added at 110°C. This mixture was refluxed with Dean-Stark trap within 12 min and then passed through short column with Silica Gel 60 (40-63 um, d 90 mm, I 80 mm). The Silica Gel layer was additionally washed by 500 ml of toluene. The combined elute was evaporated to dryness. The product was isolated by flash chromatography on short column with Silica Gel 60 (40-63 um, d 90 mm, I 80 mm; eluent: hexanes). Yield 33.2 g (97%).

Anal. calc. for C₁₁H₁₁Br: C, 59.22; H, 4.97. Found: C, 59.47; H, 5.11.

¹H NMR (CDCl₃): δ 7.19-7.23 (m, 2H, 4,6-H), 7.10 (m, 1H, 5-H), 6.50 (m, 1H, 3-H), 4.56 (s, 2H, CH₂Br), 3.36 (br.s, 2H, 1,1'-H), 2.19 (m, 3H, 2-Me).

¹³C{¹H} NMR (CDCl₃): δ 146.6, 146.2, 142.4, 132.0, 127.17, 127.14, 124.4, 120.2, 40.9, 31.7, 16.17.

### 2,5, 7-Trimethyl-3-[(2-methyl-1H-inden-7-yl)methyl]-1H-indene

To a solution of 4.54 g (28.7 mmol) of 2,4,6-trimethyl-1*H*-indene in 200 ml of dry THF 11.5 ml of 2.5 M (28.7 mmol) n-BuLi in hexanes was added by vigorous stirring at room temperature. This mixture was stirred for 3 hours at this temperature, then cooled to -20°C, and 6.40 g (28.7 mmol) of 7-(bromomethyl)-2-methyl-1*H*-indene was added. The resulting mixture was stirred for 12 hours at room temperature and then evaporated to dryness. The residue was dissolved in 150 ml of dichloromethane, and the formed solution was washed by 200 ml of water. The organic layer was separated and evaporated to dryness. Crystallization of the crude product from 200 ml of hot hexanes gave 4.28 g (50%) of the title product.

Anal. calc. for C₂₃H₂₄: C, 91.95; H, 8.05. Found: C, 91.78; H, 8.14.

¹H NMR (CDCl₃): δ 7.06-7.12 (m, 2H, 4,5-H in 2-methy-1*H*-linden-7-yl), 6.84 (dd, J= 6.8 Hz, J= 1.8 Hz, 1H, 6-H in 2-methy-1*H*-linden-7-yl), 6.75 (s, 2H, 4,6-H in 2,5,7-trimethyl-1*H*-inden-1-yl), 6.50 (m, 1H, 3-H in 2-methy-1*H*-linden-7-yl), 3.77 (s, 2H, CH₂ bridge), 3.18 (s, 2H, CH₂ in 2,5,7-trimethyl-1*H*-inden-1-yl), 3.15 (s, 2H, CH₂ in 2-methy-1*H*-linden-7-yl), 2.27 (s, 3H, 5-Me in 2,5,7-trimethyl-1*H*-inden-1-yl), 2.16 (s, 3H, 7-Me in 2,5,7-trimethyl-1*H*-inden-1-yl), 2.08 (s, 3H, 2-Me in 2-methy-1*H*-linden-7-yl), 2.00 (s, 3H, 2-Me in 2,5,7-trimethyl-1*H*-inden-1-yl).

¹³C{¹H} NMR (CDCl₃): δ 147.03, 146.74, 145.67, 145.49, 141.53, 140.20, 137.98, 134.55, 134.23, 131.79, 41.59, 41,27, 28.82, 21.43, 18.46, 16.80, 14.36.

### 1,4-Methylidene(η⁵-2,5,7-trimethylinden-1-yl)(2-methylinden-4-yl)zirconium dichloride

To a solution of 2.14 g (7.12 mmol) of 2,5,7-trimethyl-3-[(2-methyl-1*H*-inden-7-yl)methyl]-1*H-*indene in 70 ml of ether 5.70 ml of 2.5 M (14.2 mmol) n-BuLi in hexanes was added dropwise by vigorous stirring at room temperature. This solution was additionally stirred for 18 hours, then cooled to -50°C, and 2.69 g (7.12 mmol) of ZrCl₄(THF)₂ was added. The resulting mixture was stirred for 14 hours at room temperature and then evaporated in vacuum to dryness. The residue was treated with 50 ml of toluene, and the obtained suspension was evaporated in vacuum. This treatment with toluene followed by evaporation to dryness was repeated twice. Then, 70 ml of toluene was added, the resulting suspension was stirred for 12 hours at reflux, and then filtered through Celite layer. The filtrate was evaporated to a volume of ca. 15 ml. Crystals precipitated at room temperature were collected, washed by 5 ml of cold toluene, and dried in vacuum. Yield 1.25 g (38%).

Anal. calc. for C₂₃H₂₂Cl₂Zr: C, 59.98; H, 4.81. Found: C, 60.20; H, 4.94.

¹H NMR (CD₂Cl₂): δ 7.22-7.30 (m, 2H, 5,6-H in 2-methylindenyl), 6.97 (m, 1H, 7-H in 2-methylindenyl), 6.65 (s, 1H, 7-H in 2,4,6-trimethylindenyl), 6.59 (s, 1H, 5-H in 2,4,6-trimethylindenyl), 6.39 (s, 1H, 3-H in 2,4,6-trimethylindenyl), 6.37 (d, J= 1.9 Hz, 1H, 3-H in 2-methylindenyl), 6.93 (d, J= 1.9 Hz, 1H, 1-H in 2-methylindenyl), 4.45 (d, J= 14.1 Hz, 1H, CHH' in the bridge), 4.16 (d, J= 14.1 Hz, 1H, C*H*H' in the bridge), 2.56 (s, 3H, 6-Me in 2,4,6-trimethylindenyl), 2.29 (s, 3H, 2-Me in 2-methylindenyl), 2.26 (s, 3H, 4-Me in 2,4,6-trimethylindenyl), 2.11 (s, 3H, 2-Me in 2,4,6-trimethylindenyl).

### Preparation of the catalyst

The procedure of catalyst preparation of Example 1 was repeated except that the amount of MAO solution was 1.32 mL and the amount of additional toluene was 2.92 mL. The compound prepared as described above in Preparation of the metallocene compound was used as the metallocene compound in an amount of 13.5 mg.

### Polymerization

The polymerization was conducted as described in Example 1 except that the catalyst prepared as described above was used.

The polymerization data is shown in Table 1.

### Example 3 (Comparative)

### Preparation of the metallocene compound

To a solution 35.2 mmol of 1*H*-indene in 170 ml of THF a solution of 35.3 mmol of 4/7-(2-bromoethyl)- 2,5,6-trimethyl-1*H*-indene in 10 ml of THF was added dropwise by vigorous stirring for 10 min at -80 °C. This mixture was stirred for 12 h at room temperature, and then 1 ml of water was added. The resulting mixture was evaporated to dryness, and 100 ml of water was added to the residue. The crude product was extracted by 3 x 50 ml of dichloromethane. The combined organic extract was dried over Na₂SO₄ and evaporated to dryness. The product was isolated by flash chromatography using a short column with Silica Gel 60 (40-63 µm, d 80 mm, I 60 mm; eluent: hexanes).

To a solution of 10.0 mmol of the ligand prepared above in 200 ml of ether 8.0 ml of 2.5 M (20 mmol) of n-BuLi in hexanes was added by vigorous stirring for 5 min at room temperature. This mixture was stirred for 12 h, then cooled to -30 °C, and 10 mmol of ZrCl₄(THF)₂ was added. The resulting mixture was stirred for 24 h at room temperature and then evaporated to dryness. A mixture of the residue obtained and 200 ml of toluene was stirred for 6 h at 80 °C and then filtered through glass frit (G4). The precipitate was additionally washed by 3 x 50 ml of hot toluene. The combined extract was evaporated to dryness, and the residue was re-crystallized from 20 ml of toluene. Crystals precipitated at - 30 °C were collected, washed by 3 x 2 ml of cold toluene, 2 x 7 ml of hexanes, and dried in vacuum.

### Preparation of the catalyst

The procedure of catalyst preparation of Example 1 was repeated except that the amount of MAO solution was 1.31 mL and the amount of additional toluene was 2.89 mL. The compound prepared as described above in Preparation of the metallocene compound was used as the metallocene compound in an amount of 13.4 mg.

### Polymerization

The polymerization was conducted as described in Example 1 except that the catalyst prepared as described above was used.

The polymerization data is shown in Table 1.

### Example 4 (Comparative)

### Preparation of the metallocene compound

To a solution of 971 mg (13.5 mmol) of CpLi in 100 ml of THF a solution of 3.0 g (13.5 mmol) of chloro(dimethyl)(di-1,2-methyl-1*H*-inden-7-yl)silane in 10 ml of THF was added dropwise by vigorous stirring for 5 min at -80 °C. This mixture was additionally stirred for 1 h at room temperature, and 1 ml of water was added. The mixture was evaporated to dryness, and 100 ml of water was added to the residue. The crude product was extracted with 3 x 50 ml of dichloromethane. The combined organic extract was dried over Na₂SO₄ and evaporated to dryness. The product was isolated from the residue by flash chromatography using a short column with Silica Gel 60 (40-63 µm, d 60 mm, I 50 mm; eluent: hexanes).

To a solution of 10.0 mmol of the ligand prepared above in 200 ml of ether 8.0 ml of 2.5 M (20 mmol) of n-BuLi in hexanes was added by vigorous stirring for 5 min at room temperature. This mixture was stirred for 12 h, then cooled to -30 °C, and 10 mmol of ZrCl₄(THF)₂ was added. The resulting mixture was stirred for 24 h at room temperature and then evaporated to dryness. A mixture of the residue obtained and 200 ml of toluene was stirred for 6 h at 80 °C and then filtered through glass frit (G4). The precipitate was additionally washed by 3 x 50 ml of hot toluene. The combined extract was evaporated to dryness, and the residue was re-crystallized from 20 ml of toluene. Crystals precipitated at - 30 °C were collected, washed by 3 x 2 ml of cold toluene, 2 x 7 ml of hexanes, and dried in vacuum.

### Preparation of the catalyst

The procedure of catalyst preparation of Example 1 was repeated except that the amount of MAO solution was 1.31 mL and the amount of additional toluene was 2.89 mL. The compound prepared as described above in Preparation of the metallocene compound was used as the metallocene compound in an amount of 12.4 mg.

### Polymerization

The polymerization was conducted as described in Example 1 except that the catalyst prepared as described above was used.

The polymerization data is shown in Table 1.

### Example 5 (Reference)

### Preparation of the metallocene compound

As the metallocene compound rac-Et(IndH₄)₂ZrCl₂ supplied by WITCO (compound TA2849) was used

### Preparation of the catalyst

The procedure of catalyst preparation of Example 1 was repeated except that the amount of MAO solution was 1.32 mL and the amount of additional toluene was 2.91 mL. The compound prepared as described above in Preparation of the metallocene compound was used as the metallocene compound in an amount of 13.7 mg.

### Polymerization

The polymerization was conducted as described in Example 1 except that the catalyst prepared as described above was used.

The polymerization data is shown in Table 1.

**Table 1: Polymerization data**

| Example | Catalyst productivity g PP/g catalyst | Mw g/mol | Mw/Mn | Tm °C | Crystallinity % | Isotactic index % |
|---|---|---|---|---|---|---|
| 1 | 10 | 128000 | 2.6 | 142.3 | 31 | 52 |
| 2 | 19 | 153000 | 2.2 | 101.7 | 23 | 52 |
| 3 (C) | 14 | 45500 | 2.2 | 132.6 | 17 | 31 |
| 4 (C) | 15 | 27000 | 2.8 | 128 | 17 | 34 |
| 5 (R) | 85 | 30000 | 2.6 | 127.8 | 34 | 77 |

**Table 2: metallocene compounds used in the examples**

| Example | Empirical Formula | Structure | Comments |
|---|---|---|---|
| 1 | C₂₆H₃₀Cl₂SiZr | 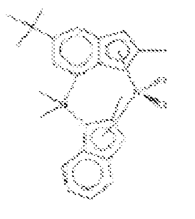 | Pure meso |
| 2 | C₂₃H₂₂Cl₂Zr | 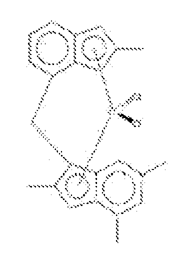 | one pure isomer |
| 3 (Comp.) | C₂₃H₂₂Cl₂Zr | 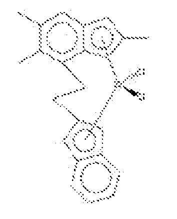 | single complex |
| 4 (Comp.) | C₁₈H₂₀Cl₂SiZr | 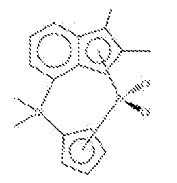 | single complex |
| 5 (Ref.) | - | rac-Et(IndH₄)₂ZrCl₂ | Witco,TA 2849 M_{w}=427,56 |

## Claims

1. A process for producing propylene polymers having a crystallinity of at least 20 %, said process comprising contacting a monomer mixture comprising propylene with a catalyst comprising (A) a metallocene compound having the formula (I) below and (B) an activator for said metallocene,
QR₂(IndR₇₋ₚ)₂MeX₂ (I)
wherein Ind is a ligand having indenyl or tetrahydroindenyl structure, each R independently is hydrogen, an alkyl, aryl, alkylaryl, arylalkyl, alkylene, silyl, alkoxy or siloxy group having from 1 to 30 carbon atoms, Q is Si or C, Me is a transition metal of group 4 or 5, each X independently is a halogen, or an alkyl, aryl, alkylaryl, arylalkyl, alkylene, silyl, alkoxy or siloxy group having from 1 to 30 carbon atoms and x is an integer from 1 to 6, **characterized in that** Q is a bridging group connecting one of the carbons 1 to 3 of one ligand Ind to one of the carbons 4 to 7 of the other ligand Ind.

2. The process according to claim 1 wherein said activator for said metallocene is an alumoxane, preferably methylalumoxane (MAO).

3. The process according to any one of claims 1 or 2 wherein said monomer mixture comprises from 90 to 100 % propylene and from 0 to 10 % one or more olefin comonomers selected from ethylene and alpha-olefins having from 4 to 20 carbon atoms.

4. The process according to claim 3 wherein said monomer mixture consists of propylene.

5. The process according to any one of the preceding claims wherein the transition metal is of group 4 and is preferably Zr.

6. The process according to any one of the preceding claims wherein X is halogen, preferably Cl.

7. The process according to any one of the preceding claims wherein p is an integer from 4 to 6.

8. The process according to any one of the preceding claims wherein each R is independently an alkyl group having from 1 to 6 carbon atoms or an aryl, alkylaryl or arylalkyl group having from 6 to 15 carbon atoms.

9. The process according to any one of the preceding claims wherein the metallocene compound has the formula (II) or (III)

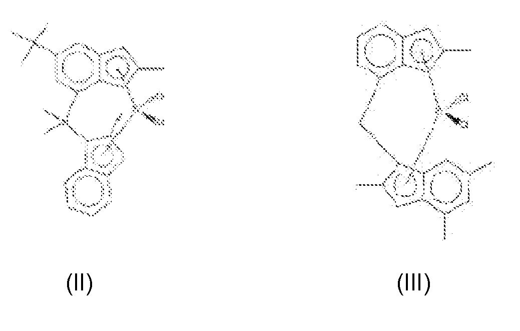

10. The process according to any one of the preceding claims wherein Q is Si.

11. The process according to claim 10 wherein one or both groups R bound to Q are alkyl groups, preferably methyl groups.

12. The process according to any one of the preceding claims wherein at least one substituent R bound to said ligand Ind is not hydrogen.
